# EUROPEAN PATENT APPLICATION

(11) **EP 4 703 437 A1**
(43) Date of publication of application: **04.03.2026**
(21) Application number: 24797187.2
(22) Date of filing: 26.04.2024
(51) Int. Cl.: C09D 11/101, B41J 2/01, B41M 5/00

(54) **ULTRAVIOLET-CURABLE COMPOSITION, METHOD FOR PRODUCING CURED PRODUCT, CURED PRODUCT, ULTRAVIOLET-CURABLE INK, METHOD FOR PRODUCING PRINTED MATTER, AND PRINTED MATTER**

(30) Priority: 28.04.2023 JP 2023074493
(71) Applicant: Mitsubishi Chemical Corporation, Tokyo 100-8251 (JP)
(72) Inventor: KASAI, Kengo, Tokyo 100-8251 (JP); INABA, Keisuke, Tokyo 100-8251 (JP); GOROUMARU, Shiho, Tokyo 100-8251 (JP); NAKAGAWA, Tomoko, Tokyo 100-8251 (JP); MAKINOUCHI, Takahito, Tokyo 100-8251 (JP)
(74) Representative: Hoffmann Eitle
(86) International application number: PCT/JP2024/016470
(87) International publication number: WO 2024/225443

(57) **Abstract**

Provided is an ultraviolet-curable composition containing at least a radically polymerizable compound, a polymerization initiator, and a solvent, with the radically polymerizable compound being present as particles, and the polymerization initiator containing a compound represented by Formula (1). Also provided is an ultraviolet-curable ink containing at least a radically polymerizable compound, a polymerization initiator, a colorant, and a solvent, with the radically polymerizable compound being present as particles, and the polymerization initiator containing a compound represented by Formula (1). In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.

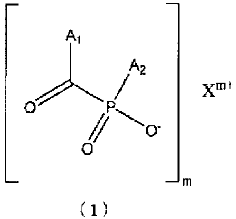

## Description

### Technical Field

The present disclosure relates to an ultraviolet-curable composition and an ultraviolet-curable ink. The present disclosure also relates to a cured product obtained by curing the ultraviolet-curable composition and to a printed matter obtained by curing the ultraviolet-curable ink.

### Background Art

In the fields of inks, adhesives, coating agents, and the like, problems such as air pollution and occupational health and safety during work arise when products containing a large amount of organic solvents are used. One solution to such problems is to use water-based products. However, water-based products may be insufficient in terms of water resistance, solvent resistance, and hardness of the coating film as compared with products that use an organic solvent. A solution to this problem is a method in which a component that is cured by ultraviolet light is blended into a water-based product to form an ultraviolet-curable composition, and the ultraviolet-curable composition is applied and then cured by irradiation with ultraviolet light to form a coating film.

Among the above-mentioned products, the demand for particularly inks for inkjet printers has been increasing in recent years. Inkjet printers provide merits such as ease of full color printing, less noise, the ability to obtain high-resolution images at a low cost, the ability to achieve high-speed printing, the ability to print on a curved surface as well as a flat surface, and the ability to easily print on a large surface area. Therefore, in recent years, inkjet printers have been rapidly growing in popularity not only for personal use, but also as commercial inkjet printers for use in printing signs, window films, posters, car wraps, wallpaper, and the like.

In commercial inkjet printers, the printed matter is required to exhibit characteristics such as (1) high image quality, (2) high coating film properties, (3) high-speed printability, (4) substrate versatility, and (5) environmental and safety properties. In the case of printing a printed matter having a large surface area or a printed matter for outdoor use, the printed film is further required to exhibit excellent coating film performance such as water resistance, alcohol resistance, coating film strength, and light resistance.

Typical printing inks for commercial inkjet printers include water-based inks in which a pigment is dispersed in an aqueous medium; solvent-based UV inks in which a pigment and an ultraviolet-curable monomer are dispersed or dissolved in an organic solvent; solventless UV inks in which a pigment is dispersed in an ultraviolet-curable monomer without a solvent; water-based latex inks in which a pigment and a resin are dispersed in an aqueous medium; and ultraviolet-curable water-based inks in which a pigment and an UV-curable oligomer are dispersed in an aqueous medium.

Among these, ultraviolet-curable water-based inks exhibit all the above characteristics in a relatively well-balanced manner. However, water-based inks generally exhibit poor coating film performance and weak coating film strength, and thus are not suitable for printed matter having a large surface area or for printed matter for outdoor use.

### Citation List

### Patent Literature

Patent Literature 1: JP 2004-209976 A
Patent Literature 2: JP 2013-199110 A

### Summary

### Technical Problem

Thus, an object of the present disclosure is to provide an ultraviolet-curable composition and an ultraviolet-curable ink that can be used to obtain a coating film that exhibits more excellent coating film performance than in the past, and particularly excellent water resistance and solvent resistance.

### Solution to Problem

As a result of intensive studies, the present inventors discovered that an ultraviolet-curable composition and an ultraviolet-curable ink that can be used to obtain a coating film excelling in water resistance and solvent resistance can be realized by including a radically polymerizable compound in the form of particles and using a polymerization initiator that contains a specific compound.

The present disclosure is achieved based on such findings, and the gist thereof is as follows.
[1] An ultraviolet-curable composition containing at least a radically polymerizable compound, a polymerization initiator, and a solvent,
   the radically polymerizable compound being present as particles, and
   the polymerization initiator containing a compound represented by Formula (1). 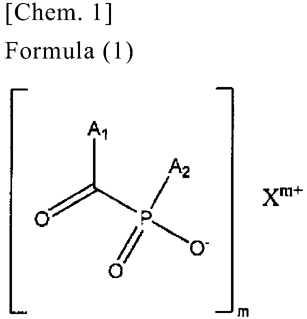 In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.
[2] The ultraviolet-curable composition according to [1], wherein the solvent contains water.
[3] The ultraviolet-curable composition according to [1] or [2], wherein the solvent further contains a water-soluble organic solvent.
[4] The ultraviolet-curable composition according to any one of [1] to [3], further containing an additional polymerization initiator, and the additional polymerization initiator including a compound represented by Formula (2). 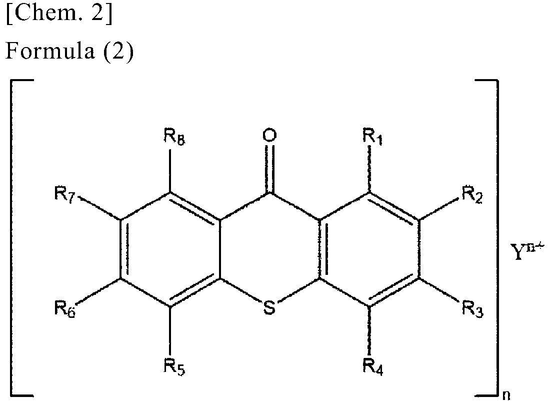 In Formula (2), each of R₁ to R₈ independently represents a hydrogen atom or a substituent, provided that at least one of R₁ to R₈ is Q⁻, and Q⁻ represents a deprotonated anionic functional group. Yⁿ⁺ represents a counter cation. n represents an integer of 1 or greater.
[5] The ultraviolet-curable composition according to [4], wherein R₄ in Formula (2) is Q⁻.
[6] The ultraviolet-curable composition according to [4] or [5], wherein, in Formula (2), Q⁻ is a group containing a carboxylate group or a sulfonyl group at a terminal end, and Yⁿ⁺ is any one of an alkali metal ion, an alkaline earth metal ion, an ion derived from an organic amine, or an ammonium ion.
[7] The ultraviolet-curable composition according to any one of [1] to [6], wherein the X^{m+} is an ion derived from an organic amine or an ammonium ion.
[8] The ultraviolet-curable composition according to any one of [1] to [7], further containing a surfactant, the surfactant being a silicone-based surfactant.
[9] A method for producing a cured product, the method including applying or printing the ultraviolet-curable composition described in any one of [1] to [8] onto a surface of a substrate, and then irradiating the substrate with an active energy ray.
[10] A cured product obtained by curing the ultraviolet-curable composition described in any one of [1] to [8].
[11] An ultraviolet-curable ink containing at least a radically polymerizable compound, a polymerization initiator, a colorant, and a solvent,
   the radically polymerizable compound being present as particles, and
   the polymerization initiator including a compound represented by Formula (1). 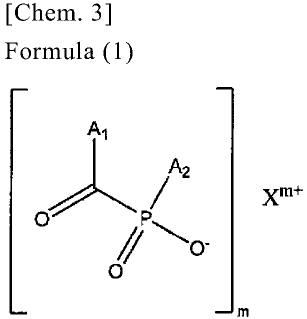 In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.
[12] The ultraviolet-curable ink according to [11], wherein the solvent contains water.
[13] The ultraviolet-curable ink according to [11] or [12], wherein the solvent further contains a water-soluble organic solvent.
[14] The ultraviolet-curable ink according to any one of [11] to [13], further containing an additional polymerization initiator, and the additional polymerization initiator including a compound represented by Formula (2). 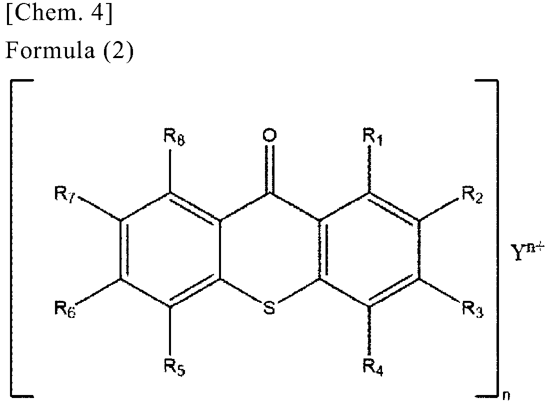 In Formula (2), each of R₁ to R₈ independently represents a hydrogen atom or a substituent, provided that at least one of R₁ to R₈ is Q⁻, and Q⁻ represents a deprotonated anionic functional group. Yⁿ⁺ represents a counter cation. n represents an integer of 1 or greater.
[15] The ultraviolet-curable ink according to [14], wherein R₄ in Formula (2) is Q⁻.
[16] The ultraviolet-curable ink according to [14] or [15], wherein, in Formula (2), Q⁻ is a group containing a carboxylate group or a sulfonyl group at a terminal end, and Yⁿ⁺ is any one of an alkali metal ion, an alkaline earth metal ion, an ion derived from an organic amine, or an ammonium ion.
[17] The ultraviolet-curable ink according to any one of [11] to [16], wherein the X^{m+} is an ion derived from an organic amine or an ammonium ion.
[18] The ultraviolet-curable ink according to any one of [11] to [17], further containing a surfactant, the surfactant being a silicone-based surfactant.
[19] A method for producing a printed matter, the method including applying or printing the ultraviolet-curable ink described in any one of [11] to [18] onto a surface of a substrate, and then irradiating the substrate with an active energy ray.
[20] A printed matter obtained by curing the ultraviolet-curable ink described in any one of [11] to [18].

### Advantageous Effects

The ultraviolet-curable composition and the ultraviolet-curable ink of the present disclosure can be used to obtain a cured film having excellent water resistance and solvent resistance.

### Description of Embodiments

Hereinafter, an embodiment of the present disclosure will be described. However, the present disclosure is not limited to this embodiment.

In the present disclosure, the expression "from X to Y" (where X and Y are any numbers) includes the meaning of "X or greater and Y or less", and the meaning of "preferably greater than X" and "preferably less than Y", unless otherwise specified.

### Ultraviolet-Curable Composition

An ultraviolet-curable composition of the present disclosure (hereinafter, which may be referred to as the "composition of the present disclosure ") is characterized in that it contains at least a radically polymerizable compound, a polymerization initiator, and a solvent, with the radically polymerizable compound being present as particles, and the polymerization initiator containing a compound represented by Formula (1).

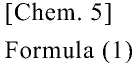

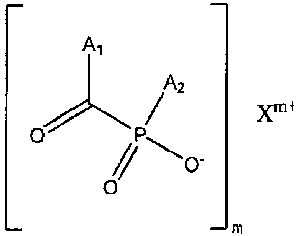

In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.

The usage form of the ultraviolet-curable composition of the present disclosure is not particularly limited, and the ultraviolet-curable composition can be used as a coating material, an adhesive, a paint, a clear ink, or the like.

An ultraviolet-curable ink of the present disclosure can be prepared by adding a colorant described below to the ultraviolet-curable composition of the present disclosure. The colorant to be added may be one or more colors. By optionally adding colorants of two or more colors, the color of the ink can be adjusted to a desired color.

### Ultraviolet-Curable Ink

The ultraviolet-curable ink of the present disclosure (hereinafter, which may be referred to as "the ink of the present disclosure") is characterized in that it contains at least a radically polymerizable compound, a polymerization initiator, a colorant, and a solvent, the radically polymerizable compound is present as particles, and the polymerization initiator contains a compound represented by Formula (1).

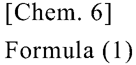

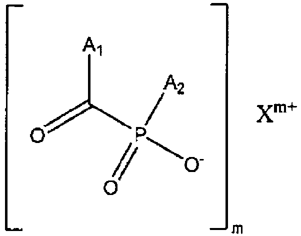

In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.

Moreover, the ink of the present disclosure is suitably used for inkjet printing.

The ultraviolet-curable composition and the ultraviolet-curable ink of the present disclosure are ultraviolet-curable, but the active energy ray used for curing is not limited to ultraviolet light.

The ultraviolet-curable composition and the ultraviolet-curable ink of the present disclosure may be cured not only by active energy rays but also by heat, for example.

### Radically Polymerizable Compound

The presence or absence of ionicity of the radically polymerizable compound used in the present disclosure is not particularly limited, and the radically polymerizable compound may be nonionic or ionic (anionic, cationic, or amphoteric). When the radically polymerizable compound used in the present disclosure has the same ionicity as that of the other materials or is nonionic, aggregation with the other materials is suppressed, and the storage stability of the ultraviolet-curable composition or the ultraviolet-curable ink can be enhanced.

Here, the term nonionic means that, for example, the hydrophilic group of the radically polymerizable compound is composed of an ether bond or a hydroxyl group that is not ionically dissociated in water.

The term ionic (anionic, cationic, or amphoteric) means, for example, that the radically polymerizable compound has a carboxyl group or an amino group that can be ionically dissociated in water. More specifically, examples of anionic radically polymerizable compounds include radically polymerizable compounds containing a carboxyl group.

The radically polymerizable compound is not particularly limited as long as it has one or more radically polymerizable groups in the molecule. The number of radically polymerizable groups in the molecule is preferably 2 or more and preferably 3 or more, and is preferably 15 or less.

Examples of the radically polymerizable group contained in the radically polymerizable compound include a (meth)acryloyl group, a vinyl group, and a vinyl ether group. Among these, a (meth)acryloyl group is preferable from the viewpoint of ease of radical polymerization.

In the present disclosure, the term "(meth)acrylate" means acrylate or methacrylate. The same applies to the term "(meth)acryloyl".

One type of radically polymerizable compound may be used alone, or two or more types thereof may be used in combination.

As the radically polymerizable compound, the radically polymerizable group-containing compound having one (meth)acryloyl group in the molecule is not particularly limited. Examples thereof include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, lactone-modified flexible (meth)acrylate, t-butylcyclohexyl (meth)acrylate, dicyclopentenyl (meth)acrylate, dicyclopentenyloxyethyl (meth)acrylate, glycidyl (meth)acrylate, and isobornyl (meth)acrylate.

The radically polymerizable group-containing compound having two (meth)acryloyl groups in the molecule is not particularly limited as the radically polymerizable compound. Examples thereof include triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, ethylene oxide (EO) adduct di(meth)acrylate of bisphenol A, propylene oxide (PO) adduct di(meth)acrylate of bisphenol A, hydroxypivalic acid neopentyl glycol di(meth)acrylate, and polytetramethylene glycol di(meth)acrylate.

The radically polymerizable group-containing compound having three or more (meth)acryloyl groups in the molecule is not particularly limited as the radically polymerizable compound. Examples thereof include trimethylolpropane tri(meth)acrylate, ethylene oxide-modified trimethylolpropane tri(meth)acrylate, propylene oxide-modified trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, ditrimethylolpropane tetra(meth)acrylate, glycerol tri(meth)acrylate, glycerin ethoxy tri(meth)acrylate, glycerin propoxy tri(meth)acrylate, caprolactone-modified trimethylolpropane tri(meth)acrylate, pentaerythritol ethoxy tetra(meth)acrylate, epichlorohydrin-modified trimethylolpropane tri(meth)acrylate, tripentaerythritol octa(meth)acrylate, tetrapentaerythritol deca(meth)acrylate, polypentaerythritol poly(meth)acrylate, and caprolactone-modified dipentaerythritol hexa(meth)acrylate.

As the radically polymerizable compound, an oligomer or a polymer having one or more radically polymerizable groups in the molecule can also be used. Among these, an oligomer or polymer having one or more (meth)acryloyl groups in the molecule is preferable. The oligomer or polymer having one or more (meth)acryloyl groups in the molecule is not particularly limited. Examples thereof include polyester (meth)acrylate, urethane (meth)acrylate, epoxy (meth)acrylate, acrylic resin (meth)acrylate, polyether (meth)acrylate, oligo (meth)acrylate, alkyd (meth)acrylate, and polyol (meth)acrylate.

The radically polymerizable compound used in the present disclosure is present as particles in the ultraviolet-curable composition or the ultraviolet-curable ink.

In the present disclosure, the expression "present as particles" means that when the particle size distribution is measured by the dynamic light scattering method using a particle size analyzer (for example, NANOTRAC WAVEII, available from MicrotracBEL Corp.), a peak is observed in a region where the particle size is greater than 1 nm.

In the present disclosure, as long as the radically polymerizable compound is present as particles, the state of being "present as particles" is satisfied both in a case in which the radically polymerizable compound is aggregated and in a case in which the radically polymerizable compound contains other substances in the particles.

Since the radically polymerizable compound is stably present as particles, an amphiphilic radically polymerizable compound may be used as the radically polymerizable compound. The amphiphilic radically polymerizable compound is not particularly limited as long as it is a compound having a radically polymerizable group and a hydrophilic group. Examples of the amphiphilic radically polymerizable compound include a macromonomer or urethane (meth)acrylate having a (meth)acryloyl group or a vinyl ether group as a radically polymerizable group and a polyalkylene glycol or an ionic group as a hydrophilic group, and a compound produced by reacting a polyisocyanate compound (A) described below, the following compound (B'), and the following compound (C').
Compound (B'): A compound that contains a polymerizable unsaturated bond and can bond to the polyisocyanate compound (A)
Compound (C'): A water-soluble compound that can bond to the polyisocyanate compound (A)

The compound produced by reacting the polyisocyanate compound (A), the compound (B'), and the compound (C') will be described in greater detail below.

Examples of the structure of the compound (B') capable of bonding to the polyisocyanate compound (A) include a hydroxyl group, a carboxyl group, and an amino group. Examples of the polymerizable unsaturated bond include a carbon-carbon double bond and a carbon-carbon triple bond, and among these, a carbon-carbon double bond is preferable. More specific examples thereof include carbon-carbon double bonds derived from a vinyl group, a (meth)acryloyl group, and the like.

The water-soluble compound of the compound (C') includes a water-soluble polymer. Specific examples of the water-soluble compound of the compound (C') include polyglycerin, polyhydroxy (meth)acrylate, polyamine, quaternary aminated polystyrene, sulfonated polystyrene, polyether, polyalkylene glycol, and the like. Among these, polyglycerin, polyhydroxy (meth)acrylate, and polyalkylene glycol are preferable, and polyalkylene glycol is particularly preferable. Each of these water-soluble compounds may be a copolymer. The compound (C') has a structure of such a water-soluble compound and a structure that can bond to the polyisocyanate compound (A). Here, the "structure that can bond to the polyisocyanate compound (A)" is the same as that of the above-mentioned compound (B').

The polyisocyanate compound (A), the compound (B'), and the compound (C') may additionally have other structures.

### Polyisocyanate Compound (A)

The polyisocyanate compound (A) is a compound having a total of two or more isocyanate groups in one molecule.

The type of the polyisocyanate compound (A) is not particularly limited, and examples thereof include chain aliphatic polyisocyanates, aromatic polyisocyanates, and alicyclic polyisocyanates. Among these, the polyisocyanate compound (A) preferably includes a trimer compound of polyisocyanate from the viewpoints of weather resistance and hardness.

The chain aliphatic polyisocyanate is a compound having a chain aliphatic structure and two or more isocyanate groups. The chain aliphatic polyisocyanate is preferable from the viewpoints of weather resistance and stretchability. The chain aliphatic structure in the chain aliphatic polyisocyanate is not particularly limited, but is preferably a linear or branched alkylene group having from 1 to 12 carbons and preferably from 1 to 6 carbons. Examples of the chain aliphatic polyisocyanate include aliphatic diisocyanates such as tetramethylene diisocyanate, hexamethylene diisocyanate, trimethylhexamethylene diisocyanate, and dimer acid diisocyanate, or trimer compounds of these polyisocyanates.

The aromatic polyisocyanate is a compound having an aromatic structure and two or more isocyanate groups. The aromatic polyisocyanate is preferable from the viewpoint of the strength of the cured product. The aromatic structure of the aromatic polyisocyanate is not particularly limited, but is preferably an aromatic structure having from 6 to 13 carbons. Examples of the aromatic polyisocyanate include aromatic diisocyanates such as tolylene diisocyanate, xylylene diisocyanate, diphenylmethane diisocyanate, m-phenylene diisocyanate, and naphthalene diisocyanate, and trimer compounds of these polyisocyanates.

The alicyclic polyisocyanate is a compound having an alicyclic structure and two or more isocyanate groups. The alicyclic structure in the alicyclic polyisocyanate is not particularly limited, but the number of carbons thereof is usually 5 or more and preferably 6 or more, and is usually 15 or less, preferably 14 or less, and preferably 13 or less. The alicyclic structure is preferably a cycloalkylene group. Examples of the alicyclic polyisocyanate include diisocyanates having an alicyclic structure, such as bis(isocyanatomethyl) cyclohexane, cyclohexane diisocyanate, bis(isocyanatocyclohexyl) methane, and isophorone diisocyanate, or trimer compounds of these polyisocyanates.

A single type of these polyisocyanate compounds (A) may be used alone, or two or more types may be used in combination.

As the polyisocyanate compound (A), a polyisocyanate having two or more structures among a chain aliphatic structure, an aromatic structure, and an alicyclic structure can also be used.

The polyisocyanate compound (A) preferably has 3 or more isocyanate groups, and preferably has 6 or less isocyanate groups, particularly from the viewpoint of adhesion to a substrate.

The polyisocyanate compound (A) is preferably a trimer obtained by a trimerization reaction of hexamethylene diisocyanate, trimethylhexamethylene diisocyanate, phenylene diisocyanate, or the like, and is preferably a trimer of hexamethylene diisocyanate.

### Compound (B')

The compound (B') is a compound that contains a polymerizable unsaturated bond and can bond to the polyisocyanate compound (A).

The compound (B') is preferably a hydroxyl group-containing (meth)acrylate because such a compound exhibits excellent properties such as ultraviolet curability, fixability, water dispersion stability, and solvent resistance. Furthermore, the compound (B') is preferably a hydroxyl group-containing polyfunctional (meth)acrylate (B) because such a compound forms a favorable crosslinked structure, and the physical properties of the cured product such as stain resistance and abrasion resistance are good.

The number of hydroxyl groups in the hydroxyl group-containing polyfunctional (meth)acrylate (B) is preferably 3 or less, preferably 2 or less, and preferably 1. The number of (meth)acryloyl groups in the hydroxyl group-containing polyfunctional (meth)acrylate (B) is preferably 8 or less, and preferably 6 or less.

Examples of the hydroxyl group-containing polyfunctional (meth)acrylate (B) include pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2-hydroxy-1,3-dimethacryloxypropane, and 2-hydroxy-3-acryloyloxypropyl methacrylate.

A single type of hydroxyl group-containing polyfunctional (meth)acrylate (B) may be used alone, or two or more types may be used in combination.

From particularly the viewpoint of the strength of the cured product obtained, the hydroxyl group-containing polyfunctional (meth)acrylate (B) is preferably one having one hydroxyl group and from 3 to 5 (meth)acryloyl groups. For example, dipentaerythritol penta(meth)acrylate and pentaerythritol tri(meth)acrylate are preferred. Dipentaerythritol penta(meth)acrylate is particularly preferable because a favorable crosslinked structure is formed, and the mechanical strength of the cured film is increased.

### Compound (C')

The compound (C') is a water-soluble compound that can bond to the polyisocyanate compound (A).

As described above, examples of the compound (C') include water-soluble polymers, and among these, a polyalkylene glycol (C) is particularly preferable.

The polyalkylene glycol (C) is not limited, but a mono-substituted structure is preferable. That is, one hydroxyl group of the glycol is preferably substituted. The substituted structure is preferably a structure that does not bond to isocyanate.

The polyalkylene glycol (C) may be a mixture of a compound having a mono-substituted structure and a compound not having a mono-substituted structure.

The molecular weight of the polyalkylene glycol (C) (meaning the number average molecular weight when the polyalkylene glycol (C) is not a single compound) is not limited, but is usually 100 or greater, and preferably 200 or greater, and is usually 5000 or less, and preferably 2000 or less.

Among the polyalkylene glycols (C), polyalkylene glycol mono-substituted ethers are preferred. Among the polyalkylene glycol mono-substituted ethers, a polyalkylene glycol mono-substituted ether not containing an ionic substituent in the ether moiety is more preferable. For example, a compound represented by Formula (3) is even more preferable.

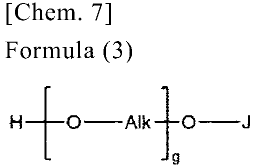

In Formula (3), Alk is an alkylene group, and J is any one of an alkyl group, a (meth)acryloyl group, an allyl group, an acyl group, and a hydrogen atom. g is an integer of 2 or greater.

Alk in Formula (3) is preferably an alkylene group having from 1 to 3 carbons, and among these alkylene groups, Alk is preferably an ethylene group, a trimethylene group, or a propylene group, and is preferably an ethylene group from the viewpoint of storage stability. From the viewpoint of the strength of the cured product, J is preferably a (meth)acryloyl group, an allyl group, or an acyl group, and is preferably an allyl group.

From the viewpoint of the strength of the cured product obtained, g in Formula (3) is usually 2 or greater, preferably 5 or greater, and preferably 6 or greater, and is usually 500 or less, preferably 100 or less, and preferably 50 or less.

A single type of these polyalkylene glycols (C) may be used alone, or two or more types may be used in combination. The polyalkylene glycol (C) may be a mixture of polyalkylene glycols having different molecular weights (compounds having different values of g in Formula (3)).

### Weight Average Molecular Weight

From the viewpoint of the performance and handling properties of the cured product, in a case in which the radically polymerizable compound is a polymer, the weight average molecular weight calibrated with polystyrene as determined by gel permeation chromatography (GPC) is preferably 1000 or greater, and preferably 2000 or greater, and is preferably 100000 or less, and preferably 50000 or less.

### Average Particle Size

In the ultraviolet-curable composition and the ultraviolet-curable ink of the present disclosure, the radically polymerizable compound is present as particles. The particles preferably have an average particle size from 10 nm to 250 nm, and preferably from 20 nm to 200 nm. When the average particle size of the radically polymerizable compound is within the above range, the dispersion stability is good.

Here, the average particle size of the radically polymerizable compound is, for example, a volume average particle size (D₅₀) measured by a particle size-measuring device based on the dynamic light scattering method.

In the examples described below, the average particle size of the radically polymerizable compound particles in an aqueous dispersion of the radically polymerizable compound is measured, but the average particle size of the radically polymerizable compound particles in the aqueous dispersion and the average particle size of the radically polymerizable compound particles in the ultraviolet-curable composition and the ultraviolet-curable ink are substantially equivalent.

The average particle size of the radically polymerizable compound means the particle size (primary particle size) of the radically polymerizable compound particles.

### Colorant

The ultraviolet-curable ink of the present disclosure contains a colorant.

As the colorant used in the ultraviolet-curable ink of the present disclosure, various dyes or pigments known as colorants and used in inks can be used. From the viewpoints of irradiation with ultraviolet light and long-term storage durability of printed images, a pigment is preferably used as the colorant.

### Dye

The dye that can be used in the present disclosure is not particularly limited, and examples thereof include water-soluble dyes such as acid dyes, direct dyes, and reactive dyes, as well as disperse dyes. Among these, anionic dyes are preferable.

### Water-Soluble Dyes

Examples of the water-soluble dyes include azo dyes, methine dyes, azomethine dyes, xanthene dyes, quinone dyes, phthalocyanine dyes, triphenylmethane dyes, and diphenylmethane dyes. Examples of specific compounds thereof are presented below, but the water-soluble dyes are not limited to these compounds indicated.
C.I. Acid Yellow
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246
C.I. Acid Orange
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168
C.I. Acid Red
   88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415
C.I. Acid Violet
   17, 19, 21, 42, 43, 47, 48, 49, 54, 66, 78, 90, 97, 102, 109, 126
C.I. Acid Blue
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350
C.I. Acid Green
   9, 12, 16, 19, 20, 25, 27, 28, 40, 43, 56, 73, 81, 84, 104, 108, 109
C.I. Acid Brown
   2, 4, 13, 14, 19, 28, 44, 123, 224, 226, 227, 248, 282, 283, 289, 294, 297, 298, 301, 355, 357, 413
C.I. Acid Black
   1, 2, 3, 24, 26, 31, 50, 52, 58, 60, 63, 107, 109, 112, 119, 132, 140, 155, 172, 187, 188, 194, 207, 222
C.I. Direct Yellow
   8, 9, 10, 11, 12, 22, 27, 28, 39, 44, 50, 58, 79, 86, 87, 98, 105, 106, 130, 132, 137, 142, 147, 153
C.I. Direct Orange
   6, 26, 27, 34, 39, 40, 46, 102, 105, 107, 118
C.I. Direct Red
   2, 4, 9, 23, 24, 31, 54, 62, 69, 79, 80, 81, 83, 84, 89, 95, 212, 224, 225, 226, 227, 239, 242, 243, 254
C.I. Direct Violet
   9, 35, 51, 66, 94, 95
C.I. Direct Blue
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291
C.I. Direct Green
   26, 28, 59, 80, 85
C.I. Direct Brown
   44, 106, 115, 195, 209, 210, 222, 223
C.I. Direct Black
   17, 19, 22, 32, 51, 62, 108, 112, 113, 117, 118, 132, 146, 154, 159, 169
C.I. Basic Yellow
   1, 2, 11, 13, 15, 19, 21, 28, 29, 32, 36, 40, 41, 45, 51, 63, 67, 70, 73, 91
C.I. Basic Orange
   2, 21, 22
C.I. Basic Red
   1, 2, 12, 13, 14, 15, 18, 23, 24, 27, 29, 35, 36, 39, 46, 51, 52, 69, 70, 73, 82, 109
C.I. Basic Violet
   1, 3, 7, 10, 11, 15, 16, 21, 27, 39
C.I. Basic Blue
   1, 3, 7, 9, 21, 22, 26, 41, 45, 47, 52, 54, 65, 69, 75, 77, 92, 100, 105, 117, 124, 129, 147, 151
C.I. Basic Green
   1, 4
C.I. Basic Brown
   1
C.I. Reactive Yellow
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176
C.I. Reactive Orange
   1, 4, 5, 7, 11, 12, 13, 15, 16, 20, 30, 35, 56, 64, 67, 69, 70, 72, 74, 82, 84, 86, 87, 91, 92, 93, 95, 107
C.I. Reactive Red
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235
C.I. Reactive Violet
   1, 2, 4, 5, 6, 22, 23, 33, 36, 38
C.I. Reactive Blue
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236
C.I. Reactive Green
   8, 12, 15, 19, 21
C.I. Reactive Brown
   2, 7, 9, 10, 11, 17, 18, 19, 21, 23, 31, 37, 43, 46
C.I. Reactive Black
   5, 8, 13, 14, 31, 34, 39
C.I. Food Black
   1, 2

### Pigment

As the pigment, known organic and inorganic pigments can be used.

Examples of the pigment include azo pigments such as azo lake, insoluble azo pigments, condensed azo pigments, and chelate azo pigments; polycyclic pigments such as phthalocyanine pigments, perylene and perylene pigments, anthraquinone pigments, quinacridone pigments, dioxazine pigments, thioindigo pigments, isoindolinone pigments, and quinophthalone pigments; dye lakes such as basic dye type lakes and acid dye type lakes; organic pigments such as nitro pigments, nitroso pigments, aniline black, and daylight fluorescent pigments; and inorganic pigments such as carbon black, titanium oxide, and iron oxide-based pigments. As the pigment, an anionic pigment is preferable.

### Organic Pigment

Specific examples of the organic pigment are indicated below.

### Magenta or Red Pigment

C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222, and the like

### Orange or Yellow Pigment

C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 155, and the like

### Green or Cyan Pigment

C.I. Pigment Blue 15, C.I. Pigment Blue 15:2, C.I. Pigment Blue 15:3, C.I. Pigment Blue 16, C.I. Pigment Blue 60, C.I. Pigment Green 7, and the like

A single type of these dyes and pigments may be used alone, or two or more types may be used in combination.

### Solvent

The ultraviolet-curable composition and the ultraviolet-curable ink of the present disclosure contain a solvent. The solvent preferably includes water, and preferably further includes a water-soluble organic solvent.

That is, the solvent used in the present disclosure is preferably a mixture of water and a water-soluble organic solvent.

The water-soluble organic solvents include those that function as a moisture-retention solvent for enhancing moisture retention and wettability, and those that are used as an aqueous medium to adjust viscosity and improve handling properties and ejection properties in inkjet printing. The two types are not clearly distinguished from each other, and the water-soluble organic solvent used as a moisture-retention solvent also functions as a solvent.

In the present disclosure, the term water-soluble organic solvent means a compound having solubility in water. The solubility in water is not limited, but a compound that can be dissolved in water at any ratio is preferable. In addition, even a compound that is unlikely to have the characteristics of a solvent by itself (for example, a compound that is a solid or has a high viscosity at an ordinary temperature) is included in the scope of water-soluble organic solvents as long as the compound can be used as a solvent by being uniformly mixed with water.

Examples of the water-soluble organic solvent include polyhydric alcohols, ethers such as polyhydric alcohol alkyl ethers and polyhydric alcohol aryl ethers, nitrogen-containing heterocyclic compounds, amides, amines, and sulfur-containing compounds.

Specific examples of the water-soluble organic solvent include polyhydric alcohols such as ethylene glycol, diethylene glycol, 1,2-propanediol (propylene glycol), 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl 1,2,4-butanetriol, 1,2,3-butanetriol, 2,2,4-trimethyl-1,3-pentanediol, and 3-methyl-1,3,5-pentanetriol; polyhydric alcohol alkyl ethers such as ethylene glycol monoethyl ether, ethylene glycol monobutyl ether, diethylene glycol monomethyl ether, diethylene glycol monoethyl ether, diethylene glycol ethyl methyl ether, diethylene glycol monobutyl ether, tetraethylene glycol monomethyl ether, propylene glycol monomethyl ether, and propylene glycol monoethyl ether; polyhydric alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethylpropionamide, and 3-butoxy-N,N-dimethylpropionamide; amines such as monoethanolamine, diethanolamine, and triethylamine; sulfur-containing compounds such as dimethyl sulfoxide, sulfolane, and thiodiethanol; propylene carbonate, and ethylene carbonate.

Among these, propylene glycol and diethylene glycol ethyl methyl ether are preferable.

As the water-soluble organic solvent, an organic solvent having a boiling point of 250°C or lower is preferably used because not only does such an organic solvent function as a moisture-retention solvent but good drying properties are also obtained.

As the water-soluble organic solvent, a glycol ether compound and a polyol compound having 8 or more carbons are also suitably used.

Specific examples of the polyol compound having 8 or more carbons include 2-ethyl-1,3-hexanediol and 2,2,4-trimethyl-1,3-pentanediol.

Specific examples of the glycol ether compound include polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers such as ethylene glycol monophenyl ether and ethylene glycol monobenzyl ether.

A single type of these water-soluble organic solvents may be used alone, or two or more types may be used in combination.

### Polymerization Initiator

The polymerization initiator used in the present disclosure is preferably a photoradical polymerization initiator that, in response to the energy of light (ultraviolet light) received by irradiation with ultraviolet light, generates radicals, which are active species, and initiates photopolymerization of the radically polymerizable compound. As a result, the ultraviolet-curable composition or the ultraviolet-curable ink is cured.

The polymerization initiator may be dissolved in the solvent in a state of not being encapsulated in the particles of the radically polymerizable compound, or may be included in the solvent in a state of being encapsulated in the particles of the radically polymerizable compound. The polymerization initiator may also be contained in both of these states.

The polymerization initiator is preferably dissolved in the solvent rather than being encapsulated in the particles of the radically polymerizable compound, because through such a method, the amount of the polymerization initiator to be blended can be increased and the hardness of the cured film can be improved.

### Compound Represented by Formula (1)

The ultraviolet-curable composition and the ultraviolet-curable ink of the present disclosure contain a compound represented by Formula (1) as a polymerization initiator.

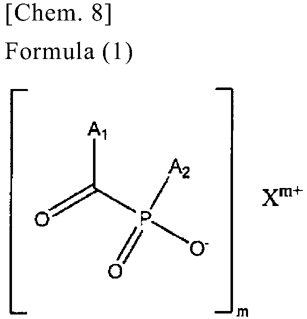

In Formula (1), A₁ represents an aryl group that may have a substituent, and A₂ represents any one of an alkyl group that may have a substituent, an alkoxy group that may have a substituent, an aryl group that may have a substituent, and an aryloxy group that may have a substituent. X^{m+} represents any one of an alkaline earth metal ion, an ion derived from an organic amine, and an ammonium ion. m represents an integer of 1 or greater.

Use of the compound represented by Formula (1) increases the sensitivity to long-wavelength ultraviolet light, and more specifically, facilitates curing using long-wavelength ultraviolet light having a wavelength from 350 to 400 nm. In addition, since the compound represented by Formula (1) is highly water-soluble, the compound can be stably dissolved in the solvent in the ultraviolet-curable composition or the ultraviolet-curable ink, and thus the storage stability of the ultraviolet-curable composition or the ultraviolet-curable ink is improved.

Here, the property "water-soluble" applies to a compound that dissolves in water at an amount of 1 mass% or more.

The absorbance of the compound represented by Formula (1) in a wavelength range from 350 nm to 400 nm is preferably 0.01 or greater, and preferably 0.1 or greater.

Here, the absorbance can be determined by preparing a solution in which the compound represented by Formula (1) is dissolved in a solvent (e.g., water) capable of dissolving the compound such that the mass concentration of the compound is 0.1%, and then using a spectrophotometer (e.g., U4000 (available from Hitachi High-Technologies Corporation)) to measure the absorbance.

The molecular weight of the compound represented by Formula (1) is not particularly limited, but is preferably 100 or greater, and preferably 200 or greater. The molecular weight of the compound represented by Formula (1) is also preferably 5000 or less, and preferably 1000 or less.

In Formula (1), A₁ represents an aryl group that may have a substituent.

The aryl group is not particularly limited as long as it has an aromatic ring structure, and examples thereof include a phenyl group, a benzyl group, a 1-naphthyl group, and a 2-naphthyl group. Among these, a phenyl group is preferable. Examples of the substituent include, but are not limited to, an alkyl group such as a methyl group or an ethyl group, an alkanol group such as a methylol group or an ethylol group, an alkoxy group such as a methoxy group or an ethoxy group, a halogeno group such as a chloro group or a bromo group, a carboxyl group, an amino group, and a nitro group. Among these, a methyl group is preferable.

From the viewpoint of curing performance, A₁ is preferably a phenyl group or a 2,4,6-trimethylphenyl group, and is preferably a 2,4,6-trimethylphenyl group.

In Formula (1), A₂ represents any one of an alkyl group that may have a substituent, an alkoxy group that may have a substituent, an aryl group that may have a substituent, and an aryloxy group that may have a substituent.

Examples of the alkyl group include, but are not limited to, a methyl group, an ethyl group, a propyl group, an isopropyl group, a butyl group, an isobutyl group, a tertiary butyl group, a pentyl group, and a neopentyl group. Examples of the alkoxy group include, but are not limited to, a methoxy group, an ethoxy group, a propoxy group, and a butoxy group. Examples of the aryl group include the same groups as those described above for A₁. Examples of the aryloxy group include a phenoxy group, a 1-naphthoxy group, and a 2-naphthoxy group. Examples of the substituent include the same substituents as those described above for A₁.

Among these, from the viewpoint of curing performance, A₂ is preferably an aryl group that may have a substituent, preferably a phenyl group that may have a substituent, and preferably a phenyl group having no substituent.

In Formula (1), X^{m+} represents any one of an alkaline earth metal ion, an ion derived from an organic amine, or an ammonium ion (NH₄⁺).

The alkaline earth metal ion means an ion of a Group 2 element (Be, Mg, Ca, Sr, Ba, Ra). Among these, magnesium ions and calcium ions are preferred from the viewpoint of safety and water solubility.

The ion derived from an organic amine means an ion derived from an organic amine other than ammonia. Specific examples thereof include a monoalkylammonium ion, a dialkyl ammonium ion, a trialkyl ammonium ion, a trialcohol ammonium ion, a monoalkyl dialcohol ammonium ion, and a dialkyl monoalcohol ammonium ion.

Among these, an ion derived from an organic amine or an ammonium ion is preferable. The reason for this is considered to be as follows.

When oxygen is present during polymerization, the polymerizable compound attacks the oxygen, and polymerization is stopped. However, in the case of an organic ion having a nitrogen atom, such as an ion derived from an organic amine or an ammonium ion, the nitrogen atom extracts a radical, and thereby the polymerization reaction can be continued. Therefore, it is considered that the polymerization proceeds more smoothly, and the water resistance and solvent resistance of the coating film formed are improved, which is preferable.

Among the ions derived from organic amines or ammonium ions, monoalkyl dialcohol ammonium ions are preferred. Examples of the alkyl moiety in the monoalkyl dialcohol ammonium ion include an ethyl group, a propyl group, and a butyl group. Examples of the alcohol moiety in the monoalkyl dialcohol ammonium ion include ethanol and propanol. Among these, an N-butyldiethanol ammonium ion is more preferable.

In Formula (1), m represents an integer of 1 or greater. Among these, an integer from 1 to 3 is preferable.

As the polymerization initiator used in the present disclosure, a polymerization initiator including a compound represented by Formula (1) may be used alone, or two or more types thereof may be used in combination. In a case in which two or more types of polymerization initiators are used in combination, polymerization initiators including the compound represented by Formula (1) but having different structures may be used in combination, and an additional polymerization initiator may also be used in combination.

### Additional Polymerization Initiator

The additional polymerization initiator may be water-soluble or fat-soluble. In addition, not only a photoradical polymerization initiator but also a thermal radical polymerization initiator can be used.

As the additional polymerization initiator, a compound represented by Formula (2) is preferable. When a polymerization initiator including a compound represented by Formula (2) is used in combination, the curability of the ultraviolet-curable composition or the ultraviolet-curable ink can be further improved.

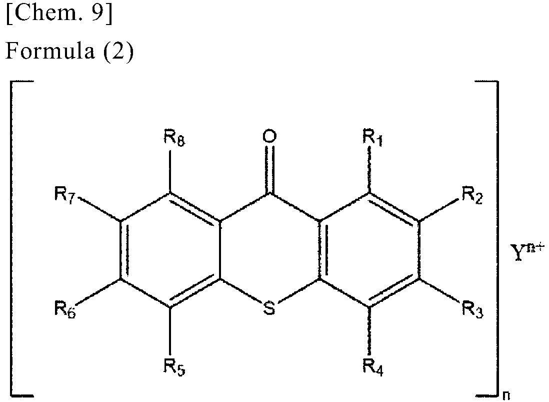

In Formula (2), each of R₁ to R₈ independently represents a hydrogen atom or a substituent. Provided that at least one of R₁ to R₈ is Q⁻, and Q⁻ represents a deprotonated anionic functional group. Yⁿ⁺ represents a counter cation. n represents an integer of 1 or greater.

In Formula (2), R₁ to R₈ each independently represent a hydrogen atom or a substituent. However, at least one of R₁ to R₈ is Q⁻, and Q⁻ represents a deprotonated anionic functional group.

Examples of the substituent include the same substituents as those described above for A₁. R₁ to R₈ other than Q⁻ each independently represent preferably a hydrogen atom or an alkanol group, and preferably a hydrogen atom.

Examples of the deprotonated anionic functional group include a group containing a carboxylate group or a sulfonyl group at a terminal end, a carboxylate group, and a sulfonyl group. Among these, a carboxylate group and a sulfonyl group are preferable, and a carboxylate group is more preferable.

In addition, R₄ among R₁ to R₈ is preferably Q⁻.

In Formula (2), Yⁿ⁺ represents a counter cation. Examples of the counter cation include any one of an alkali metal ion, an alkaline earth metal ion, an ion derived from an organic amine, and an ammonium ion.

Examples of the alkali metal ion include a lithium ion, a sodium ion, and a potassium ion.

Examples of the alkaline earth metal ion, the ion derived from an organic amine, and the ammonium ion include the same ions as those described above for X^{m+}.

Among these, alkali metal ions and ions derived from organic amines are preferable, and ions derived from organic amines are more preferable. More specifically, a lithium ion, a sodium ion, a potassium ion, and a monoalkyl dialcohol ammonium ion are preferable, and an N-butyldiethanol ammonium ion is more preferable.

In Formula (2), n represents an integer of 1 or greater. Among these, an integer from 1 to 3 is preferable.

A single type of the compound represented by Formula (2) may be used alone, or two or more types thereof may be used in combination.

Examples of the additional polymerization initiators that can be used include aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

A single type of these additional polymerization initiators may be used alone, or two or more types may be used in combination.

### Surfactant

The ultraviolet-curable composition and the ultraviolet-curable ink of the present disclosure preferably contain a surfactant to ensure flatness of the cured product and printed matter formed and wettability with the substrate.

As the surfactant, any one of nonionic surfactants such as a silicone-based surfactant and a fluorine-based surfactant, amphoteric surfactants, and anionic surfactants can be used. Among these, from the viewpoint of preventing unexpected aggregation with other components in the ink, a nonionic surfactant is preferable, and from the viewpoint of environmental compatibility, a silicone-based surfactant is more preferable even among the nonionic surfactants. In particular, in a comparison of a silicone-based surfactant and a fluorine-based surfactant, aggregation of the components in the ink is better suppressed with a silicone-based surfactant, and thus a silicone-based surfactant is more preferable.

The silicone-based surfactant is not particularly limited and may be appropriately selected according to the intended purpose. Among such surfactants, those that are not decomposed even at a high pH are preferable, and examples thereof include side chain-modified polydimethylsiloxane, both terminal end-modified polydimethylsiloxane, one terminal end-modified polydimethylsiloxane, and side chain and both terminal end-modified polydimethylsiloxane. A silicone-based surfactant having a polyoxyethylene group or a polyoxyethylene polyoxypropylene group as a modifying group is particularly preferred because such a surfactant exhibits good properties as an aqueous surfactant. A polyether-modified silicone-based surfactant can also be used as the silicone-based surfactant, and examples thereof include a compound in which a polyalkylene oxide structure is introduced into a side chain of the Si portion of dimethylsiloxane.

As the fluorine-based surfactant, a compound having from 2 to 16 carbons and substituted with fluorine is preferable, and a compound having from 4 to 16 carbons and substituted with fluorine is more preferable.

As the fluorine-based surfactant, for example, a perfluoroalkyl sulfonic acid compound, a perfluoroalkyl carboxylic acid compound, a perfluoroalkyl phosphate compound, a perfluoroalkyl alkylene oxide adduct, and a polyoxyalkylene ether polymer compound having a perfluoroalkyl ether group in a side chain are preferable because the foaming properties are low. Examples of the perfluoroalkyl sulfonic acid compound include perfluoroalkyl sulfonic acid and perfluoroalkyl sulfonate salts. Examples of the perfluoroalkyl carboxylic acid compound include perfluoroalkyl carboxylic acid and perfluoroalkyl carboxylate salts. Examples of the perfluoroalkyl phosphate compound include perfluoroalkyl phosphate and perfluoroalkyl phosphate salts. Examples of the perfluoroalkyl alkylene oxide adduct include perfluoroalkyl ethylene oxide adducts. Examples of the polyoxyalkylene ether polymer compound having a perfluoroalkyl ether group in a side chain include a sulfate salt of a polyoxyalkylene ether polymer having a perfluoroalkyl ether group in a side chain, and a salt of a polyoxyalkylene ether polymer having a perfluoroalkyl ether group in a side chain. Examples of counter ions of the salts of these fluorine-based surfactants include Li, Na, K, NH₄, NH₃CH₂CH₂OH, NH₂(CH₂CH₂OH)₂, and NH(CH₂CH₂OH)₃.

Among these, polyoxyalkylene ether polymer compounds having a perfluoroalkyl ether group in a side chain are more preferable because of the particularly low foaming property, and fluorine-based surfactants represented by Formulae (4A) and (4B) are particularly preferable.

CF₃CF₂(CF₂CF₂)ₛ-CH₂CH₂O(CH₂CH₂O)ₜH (4A)

In the compound represented by Formula (4A), in order to impart water solubility, s is preferably an integer from 0 to 10, and t is preferably an integer from 0 to 40.

CᵣF₂ᵣ₊₁-CH₂CH(OH)CH₂-O-(CH₂CH₂O)_{c}-Z (4B)

In the compound represented by Formula (4B), Z is H, or C_{d}F_{2d+1} where d is an integer from 1 to 6, or CH₂CH(OH)CH₂-CₑF₂ₑ₊₁ where e is an integer from 4 to 6, or C_{f}H_{2f+1} where f is an integer from 1 to 19. In addition, r is an integer from 1 to 6, and c is an integer from 4 to 14.

As the fluorine-based surfactant, a commercially available product can be used. Examples of such commercially available products include Surflon S-111, S-112, S-113, S-121, S-131, S-132, S-141, and S-145 (available from AGC Seimi Chemical Co., Ltd.); Fluorad FC-93, FC-95, FC-98, FC-129, FC-135, FC-170C, FC-430, and FC-431 (available from Sumitomo 3M Ltd.); Megafac F-470, F-1405, and F-474 (available from DIC Corporation); Zonyl TBS, FSP, FSA, FSN-100, FSN, FSO-100, FSO, FS-300, and UR (available from DuPont de Nemours, Inc.); FT-110, FT-250, FT-251, FT-400S, FT-150, and FT-400SW (available from Neos Corporation); Polyfox PF-136A, PF-156A, PF-151N, PF-154, and PF-159 (available from Omnova Solutions, Inc.); Noigen FN-1287 (available from DKS Co., Ltd.); Unidyne DSN-403N (available from Daikin Industries, Ltd.); and LE-604, LE-605, LE-606, and LE-607 (available from Kyoeisha Chemical Co., Ltd.).

Examples of the amphoteric surfactant include lauryl aminopropionate salts, lauryl dimethyl betaine, stearyl dimethyl betaine, and lauryl dihydroxyethyl betaine.

Examples of the nonionic surfactant include polyoxyethylene alkylphenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, acetylene alcohol derivatives, and acetylene glycol derivatives.

Examples of the anionic surfactant include polyoxyethylene alkyl ether acetate salts, dodecylbenzene sulfonate salts, laurate salts, and polyoxyethylene alkyl ether sulfate salts.

One type of these surfactants may be used alone, or two or more types may be used in combination.

As described above, the silicone-based surfactant is not particularly limited and may be appropriately selected according to the intended purpose. Among these, a polyether-modified silicone-based surfactant having a polyoxyethylene group or a polyoxyethylene polyoxypropylene group as a modifying group is particularly preferable because such a surfactant exhibits good properties as an aqueous surfactant.

As such a surfactant, a suitably synthesized product may be used, or a commercially available product may be used. Examples of the commercially available products include products available from BYK-Chemie GmbH, Shin-Etsu Chemical Co., Ltd., Dow Corning Toray Co., Ltd., Nihon Emulsion Co., Ltd., and Kyoeisha Chemical Co., Ltd.

The polyether-modified silicone-based surfactant is not particularly limited and may be appropriately selected according to the intended purpose. Examples thereof include polyether-modified silicone-based surfactants represented by Formula (5) below in which a polyalkylene oxide structure is introduced into a side chain of the Si portion of dimethylpolysiloxane. 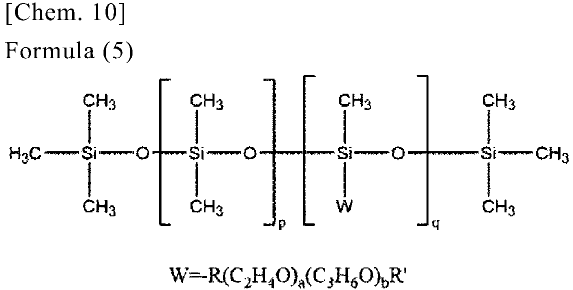 (In Formula (5), p, q, a, and b represent integers. R and R' each represent a hydrocarbon group.)

As the polyether-modified silicone-based surfactant, a commercially available product can be used. Examples of commercially available products include KF-618, KF-642, and KF-643 (Shin-Etsu Chemical Co., Ltd.); SAG001, SAG002, SAG003, SAG005, SAG503, and SAG008 (Nissin Chemical Co., Ltd.); EMALEX-SS-5602 and SS-1906EX (Nihon Emulsion Co., Ltd.); FZ-2105, FZ-2118, FZ-2154, FZ-2161, FZ-2162, FZ-2163, and FZ-2164 (Dow Corning Toray Co., Ltd.); BYK-333, BYK-347, and BYK-378 (BYK-Chemie GmbH); and TSF4440 and TSF4452 (Momentive Performance Materials Inc.).

### Sensitizer

The ultraviolet-curable composition and the ultraviolet-curable ink of the present disclosure may contain a sensitizer. When a sensitizer is present together with a polymerization initiator in the ultraviolet-curable composition and the ultraviolet-curable ink, the sensitizer in the system absorbs active energy rays and becomes excited, and upon contact with the polymerization initiator, the sensitizer promotes decomposition of the polymerization initiator, and as a result, a curing reaction with higher sensitivity can be carried out.

The sensitizer may be fat-soluble or water-soluble. A fat-soluble sensitizer can be encapsulated in the radically polymerizable compound particles.

Examples of the sensitizer include cyclic amine compounds such as aliphatic amines, amines having an aromatic group, and piperidine, alkoxy-anthracene compounds, urea-based compounds such as o-tolylthiourea, sulfur compounds such as sodium diethylthiophosphate and soluble salts of aromatic sulfinic acids, nitrile compounds such as N,N'-disubstituted-p-aminobenzonitrile, phosphorus compounds such as tri-n-butylphosphine and sodium diethyl dithiophosphate, and nitrogen compounds such as Michler's ketone, N-nitrosohydroxylamine derivatives, oxazolidine compounds, tetrahydro-1,3-oxazine compounds, and condensates of formaldehyde or acetaldehyde and a diamine.

A single type of these sensitizers may be used alone, or two or more types may be used in combination.

### Other Oligomers, Resins, and Monomers

As necessary, the ultraviolet-curable composition and the ultraviolet-curable ink of the present disclosure may contain, in addition to the above components, an optional resin component, an optional oligomer component, and an optional monomer component (these are collectively referred to as "other resin components"). The other resin components may be encapsulated in the particles of the radically polymerizable compound, may be dissolved in a solvent, or may be dispersed alone or in a state of being complexed with other components in the composition or the ink.

### Other Additives

The ultraviolet-curable composition and the ultraviolet-curable ink of the present disclosure may contain other additives, as necessary, in addition to the above components.

Examples of the other additives include known additives such as an anti-fading agent, an emulsion stabilizer, a penetration enhancer, an ultraviolet absorber, a preservative, an antifungal agent, a rust inhibitor, a pH adjuster, a viscosity adjuster, a dispersant, a dispersion stabilizer, an antifoaming agent, a solid wetting agent, and a chelating agent. These various additives may be added after preparation or may be added during preparation.

For details of the other additives, reference may be made to the descriptions in paragraphs [0088] to [0096] of JP 2010-65205 A and the descriptions in paragraphs [0083] to [0090] of JP 2010-70669 A.

### Content of Each Component

The content of water in the ultraviolet-curable composition and the ultraviolet-curable ink of the present disclosure is not particularly limited and may be appropriately selected according to the intended purpose. When the ultraviolet-curable composition and the ultraviolet-curable ink of the present disclosure are used as an inkjet ink, from the viewpoint of drying properties and ejection reliability of the ink, the content of water is usually 10 mass% or greater, and preferably 20 mass% or greater, and is usually 90 mass% or less, and preferably 80 mass% or less.

In a case in which the ultraviolet-curable composition or the ultraviolet-curable ink of the present disclosure contains a water-soluble organic solvent, the content thereof (the total content of the water-soluble organic solvent used also as a moisture-retention solvent and the water-soluble organic solvent used as an aqueous medium) is not particularly limited and can be appropriately selected according to the type of the water-soluble organic solvent to be used and the intended purpose. When the ultraviolet-curable composition or ultraviolet-curable ink of the present disclosure is used as an inkjet ink, from viewpoints such as the drying properties, ejection reliability, and wettability with a substrate, the content of the water-soluble organic solvent is usually 10 mass% or greater, and is usually 50 mass% or less and preferably 40 mass% or less.

In particular, when propylene glycol is contained as the water-soluble organic solvent, from the viewpoint of moisture retention, the content of propylene glycol in the ultraviolet-curable composition and the ultraviolet-curable ink of the present disclosure is preferably 1 mass% or greater, preferably 3 mass% or greater, and even preferably 5 mass% or greater. Meanwhile, from the viewpoint of drying properties, the content thereof is preferably 30 mass% or less, preferably 27 mass% or less, and preferably 25 mass% or less.

The total solid content concentration, which includes the components other than the solvent, in the ultraviolet-curable composition and the ultraviolet-curable ink of the present disclosure is not particularly limited and may be appropriately selected according to the intended purpose. From the viewpoint of coatability, the total solid content concentration is adjusted to usually 40 mass% or less and preferably 35 mass% or less. In a case of use as an inkjet ink, from the viewpoints of drying properties and ejection reliability, the total solid content concentration is adjusted to usually 5 mass% or greater, preferably 7 mass% or greater, and preferably 9 mass% or greater, and usually 30 mass% or less, preferably 25 mass% or less, preferably 20 mass% or less, and preferably 15 mass% or less.

In a case in which a mixed liquid of water and a water-soluble organic solvent is used as the solvent, the ratio (water : water-soluble organic solvent) of water to the water-soluble organic solvent (the total of the water-soluble organic solvent used also as a moisture-retention solvent and the water-soluble organic solvent used as a solvent) is usually from 1:0.05 to 1:1.5 (mass ratio), preferably from 1:0.1 to 1:1.2 (mass ratio), and preferably from 1:0.15 to 1:1.1 (mass ratio) from the viewpoint of improving drying properties and ejection properties during inkjet printing.

From the viewpoints of ultraviolet curability and the performance of the obtained cured product and printed matter, the content of the radically polymerizable compound in the ultraviolet-curable composition and the ultraviolet-curable ink of the present disclosure is usually 3 mass% or greater, preferably 5 mass% or greater, and even preferably 7 mass% or greater. On the other hand, in the case of use as an inkjet ink, from the viewpoint of ejection stability, the content of the radically polymerizable compound is usually 20 mass% or less, preferably 15 mass% or less, and preferably 12 mass% or less.

From the same viewpoint, the content of the radically polymerizable compound in the total solid content of the ultraviolet-curable composition and the ultraviolet-curable ink of the present disclosure is usually 30 mass% or greater, preferably 50 mass% or greater, and preferably 60 mass% or greater, and is usually 95 mass% or less, preferably 90 mass% or less, and preferably 85 mass% or less.

The total solid content in the ultraviolet-curable composition and the ultraviolet-curable ink of the present disclosure can be rephrased as the constituent components of the cured product and the printed matter formed by the ultraviolet-curable composition and the ultraviolet-curable ink of the present disclosure, and the above-described numerical value ranges can be similarly adopted. The content of each component in the total solid content is substantially equivalent to the content of each component thereof in the cured product and the printed matter formed by the ultraviolet-curable composition and the ultraviolet-curable ink of the present disclosure.

Accordingly, the matter of the content of the radically polymerizable compound in the total solid content of the ultraviolet-curable composition and the ultraviolet-curable ink of the present disclosure being usually 30 mass% or greater, preferably 50 mass% or greater, and preferably 60 mass% or greater, and usually 95 mass% or less, preferably 90 mass% or less, and preferably 85 mass% or less can be treated in the same manner as the matter of the content of the component derived from the radically polymerizable compound in the cured product and the printed matter formed by the ultraviolet-curable composition and the ultraviolet-curable ink of the present disclosure being usually 30 mass% or greater, preferably 50 mass% or greater, and preferably 60 mass% or greater, and usually 95 mass% or less, preferably 90 mass% or less, and preferably 85 mass% or less.

The same applies to the contents of the colorant and other components described below.

From the viewpoints of improved image density, good fixability, and ejection stability, the content of the colorant in the ultraviolet-curable ink of the present disclosure is usually 0.1 mass% or greater, and preferably 1 mass% or greater, and is usually 8 mass% or less, and preferably 6 mass% or less.

From the same viewpoints, the content of the colorant in the total solid content of the ultraviolet-curable ink of the present disclosure is usually 1 mass% or greater, and preferably 5 mass% or greater, and is usually 40 mass% or less, and preferably 30 mass% or less.

The content of the compound represented by Formula (1) in the ultraviolet-curable composition and the ultraviolet-curable ink of the present disclosure can be appropriately selected according to the required performance of the cured product and the printed matter to be obtained. The content of the compound represented by Formula (1) is usually 0.05 mass% or greater, preferably 0.1 mass% or greater, preferably 0.3 mass% or greater, and preferably 0.4 mass% or greater, and is usually 8 mass% or less, preferably 5 mass% or less, preferably 3 mass% or less, and preferably 2 mass% or less. When the content of the compound represented by Formula (1) is within this range, the curing rate is sufficiently improved, the compound represented by Formula (1) does not remain undissolved in the solvent, and coloration of the cured product and the printed matter can be avoided.

From the same viewpoint, the content of the compound represented by Formula (1) in the total solid content of the ultraviolet-curable composition and the ultraviolet-curable ink of the present disclosure is usually 0.5 mass% or greater, preferably 1 mass% or greater, preferably 2 mass% or greater, and preferably 3 mass% or greater, and is usually 20 mass% or less, preferably 15 mass% or less, and preferably 10 mass% or less.

From the viewpoint of curability, the content ratio (mass ratio) of the compound represented by Formula (1) in relation to the radically polymerizable compound in the ultraviolet-curable composition and the ultraviolet-curable ink of the present disclosure is preferably 0.005 or greater, preferably 0.01 or greater, and preferably 0.03 or greater. On the other hand, from the viewpoint of storage stability of the ink, this content ratio (mass ratio) is preferably 0.8 or less, preferably 0.5 or less, and preferably 0.3 or less.

When the compound represented by Formula (2) is contained as a polymerization initiator in the ultraviolet-curable composition and the ultraviolet-curable ink of the present disclosure, the content of the compound represented by Formula (2) in the ultraviolet-curable composition and the ultraviolet-curable ink of the present disclosure is usually 0.01 mass% or greater, preferably 0.03 mass% or greater, and preferably 0.05 mass% or greater, and is usually 4 mass% or less, preferably 3 mass% or less, preferably 1 mass% or less, and preferably 0.7 mass% or less. When the content of the compound represented by Formula (2) is within the above range, curability can be enhanced.

From the same viewpoint, the content of the compound represented by Formula (2) in the total solid content of the ultraviolet-curable composition and the ultraviolet-curable ink of the present disclosure is usually 0.05 mass% or greater, preferably 0.1 mass% or greater, preferably 0.3 mass% or greater, and preferably 0.5 mass% or greater, and is usually 8 mass% or less, preferably 6 mass% or less, and preferably 5 mass% or less.

In a case in which the compound represented by Formula (2) is contained as a polymerization initiator in the ultraviolet-curable composition and the ultraviolet-curable ink of the present disclosure, from the viewpoint of curability, the content ratio (mass ratio) of the compound represented by Formula (2) to the compound represented by Formula (1) in the ultraviolet-curable composition and the ultraviolet-curable ink of the present disclosure is preferably 0.02 or greater, preferably 0.06 or greater, and preferably 0.1 or greater. On the other hand, from the viewpoint of storage stability, this content ratio (mass ratio) is preferably 8 or less, preferably 4 or less, and preferably 2 or less.

Moreover, from the viewpoint of curability, the content ratio (mass ratio) of the compound represented by Formula (2) to the radically polymerizable compound in the ultraviolet-curable composition and ultraviolet-curable ink of the present disclosure is preferably 0.001 or greater, preferably 0.003 or greater, and preferably 0.005 or greater. On the other hand, from the viewpoint of storage stability, the content ratio (mass ratio) thereof is preferably 0.4 or less, preferably 0.3 or less, and preferably 0.1 or less.

The total content of all polymerization initiators in the ultraviolet-curable composition and the ultraviolet-curable ink of the present disclosure is usually 0.06 mass% or greater, preferably 0.13 mass% or greater, and preferably 0.35 mass% or greater, and is usually 12 mass% or less, preferably 8 mass% or less, preferably 4 mass% or less, and preferably 2.7 mass% or less. When the total content of all the polymerization initiators is within the above range, the curability can be enhanced.

From the same viewpoint, the total content of all the polymerization initiators in the total solid content of the ultraviolet-curable composition and the ultraviolet-curable ink of the present disclosure is usually 0.55 mass% or greater, preferably 1.1 mass% or greater, preferably 2.3 mass% or greater, and preferably 3.5 mass% or greater, and is usually 28 mass% or less, preferably 21 mass% or less, and preferably 15 mass% or less.

In a case in which the ultraviolet-curable composition and the ultraviolet-curable ink of the present disclosure contain a surfactant, the content of the surfactant is not particularly limited and may be appropriately selected according to the intended purpose. From the viewpoint of improving wettability, surface smoothness after coating, and ejection stability during inkjet printing, the content of the surfactant in the ultraviolet-curable composition and the ultraviolet-curable ink is usually 0.001 mass% or greater, preferably 0.01 mass% or greater, and preferably 0.03 mass% or greater, and is usually 5 mass% or less, preferably 3 mass% or less, and preferably 1 mass% or less.

From the same viewpoint, the content of the surfactant in the total solid content of the ultraviolet-curable composition and the ultraviolet-curable ink of the present disclosure is usually 0.01 mass% or greater, preferably 0.1 mass% or greater, and preferably 0.2 mass% or greater, and is usually 10 mass% or less, preferably 5 mass% or less, and preferably 3 mass% or less.

When the composition and ink of the present disclosure contain a sensitizer, the content thereof is usually 0.01 mass% or greater, preferably 0.03 mass% or greater, and preferably 0.05 mass% or greater, and is usually 4 mass% or less, preferably 3 mass% or less, preferably 1 mass% or less, and preferably 0.7 mass% or less. When the content of the sensitizer is within the above range, the effect of the sensitizer can be sufficiently obtained.

From the same viewpoint, the content of the sensitizer in the total solid content of the composition and the ink of the present disclosure is usually 0.05 mass% or greater, preferably 0.1 mass% or greater, preferably 0.3 mass% or greater, and preferably 0.5 mass% or greater, and is usually 8 mass% or less, preferably 6 mass% or less, and preferably 5 mass% or less.

### Method for Producing Ultraviolet-Curable Composition and Ultraviolet-Curable Ink

The method for producing the ultraviolet-curable composition and the ultraviolet-curable ink of the present disclosure is not particularly limited. An example of a method for producing the ultraviolet-curable composition and the ultraviolet-curable ink of the present disclosure is a method of preparing a dispersion in which a radically polymerizable compound is dispersed as particles in an aqueous medium (hereinafter, the dispersion may be referred to as a "radically polymerizable compound dispersion"), preparing a dispersion in which a colorant such as a pigment is dispersed in an aqueous medium (hereinafter, the dispersion may be referred to as a "colorant dispersion"), and then mixing the polymerizable compound dispersion, a polymerization initiator, other additives, an organic solvent, and if necessary, the colorant dispersion.

Even when a colorant is added to the ultraviolet-curable composition of the present disclosure, an ultraviolet-curable ink having the same performance can be obtained.

### Preparation of Radically Polymerizable Compound Dispersion

A known method such as a high-pressure emulsification method or a phase inversion emulsification method can be adopted for preparation of the radically polymerizable compound dispersion. In the preparation of the radically polymerizable compound dispersion, various known emulsifiers and dispersants may be used as necessary within a range that does not impair the effects of the present disclosure.

The high-pressure emulsification method is a method in which an aqueous phase, an oil phase, and an amphiphilic substance such as a surfactant are premixed and emulsified using a high-pressure emulsifier such as a homogenizer. The phase inversion emulsification method is a method of obtaining an oil-in-water type emulsion by dissolving and dispersing an amphiphilic substance such as a surfactant in an oil phase and adding an aqueous phase thereto. In a case in which two or more types of radically polymerizable compounds are used, the dispersion is preferably prepared after premixing the compounds.

The solid content concentration of the radically polymerizable compound dispersion prepared in this manner is preferably from about 10 mass% to about 40 mass% from the viewpoint of handling properties.

Two or more types of radically polymerizable compounds may be used. Each radically polymerizable compound may be separately prepared in a dispersion and then blended at any ratio, but it is preferable to prepare a dispersion after premixing the radically polymerizable compounds. In addition, other components, such as, for example, a polymer that is not radically polymerizable, a polymerization initiator, and a preservative, may be premixed, and then the mixture may be prepared into a dispersion.

### Preparation of Colorant Dispersion

A colorant dispersion can be prepared by adding a colorant such as a pigment to a solvent such as water and then mixing.

From the viewpoints of handling properties and storage stability, the concentration of the colorant such as a pigment in the colorant dispersion is usually 5 mass% or greater, and preferably 10 mass% or greater, and is usually 40 mass% or less, and preferably 35 mass% or less.

As the colorant dispersion, a commercially available product may be used as is.

### Viscosity of Ultraviolet-Curable Composition

The viscosity of the ultraviolet-curable composition of the present disclosure can be optionally adjusted according to the application and usage form. In a case in which the ultraviolet-curable composition of the present disclosure is used in an inkjet printer, the viscosity at 25°C is preferably 25 mPa·sec or less, preferably 20 mPa·sec or less, and preferably 10 mPa·sec or less. The lower limit of the viscosity of the ultraviolet-curable composition of the present disclosure is not particularly limited, but is preferably 1 mPa·sec or greater, and preferably 2 mPa·sec or greater.

### Viscosity of Ultraviolet-Curable Ink

The viscosity of the ultraviolet-curable ink of the present disclosure can be optionally adjusted according to the application and usage form. In a case in which the ultraviolet-curable ink of the present disclosure is used in an inkjet printer, the viscosity at 25°C is preferably 25 mPa·sec or less, preferably 20 mPa·sec or less, and preferably 10 mPa·sec or less. The lower limit of the viscosity of the ultraviolet-curable ink of the present disclosure is not particularly limited, but is preferably 1 mPa·sec or greater, and preferably 2 mPa·sec or greater.

### Substrate

The substrate to which the ultraviolet-curable composition and the ultraviolet-curable ink of the present disclosure are applied is not particularly limited, and examples thereof include plastic materials such as polyesters (such as polyethylene terephthalate (PET)) and polyolefins (such as polyvinyl chloride (PVC), polyethylene (PE), and polypropylene (PP)), papers, textiles (cloth and fabrics), leather, glass, ceramics, wood, metal, rubber, and composite materials thereof. The ultraviolet-curable composition and the ultraviolet-curable ink of the present disclosure can form a cured product and a printed matter having good strength and adhesion to these various substrates.

### Cured Product and Printed Matter

A cured product and a printed matter can be obtained by curing the ultraviolet-curable composition and the ultraviolet-curable ink of the present disclosure, respectively.

As a method of curing the ultraviolet-curable composition or the ultraviolet-curable ink of the present disclosure to obtain a cured product or a printed matter, a method may be used in which the ultraviolet-curable composition or the ultraviolet-curable ink is applied onto a substrate using a known method such as a coater (such a spin coater and a bar coater) or various printing methods such as inkjet printing, after which the coated substrate is irradiated with an active energy ray. Alternatively, a method may be used in which the ultraviolet-curable composition or the ultraviolet-curable ink is applied onto a substrate such as a film, then transferred onto another substrate, and then irradiated with an active energy ray. In addition, the cured product or printed matter can be patterned by photolithography.

The polymerization initiator containing a compound represented by Formula (1) is decomposed by irradiation with an active energy ray, resulting in the generation of radicals, and thereby a polymerization reaction of the radically polymerizable compound proceeds.

As a method of curing the ultraviolet-curable composition or the ultraviolet-curable ink of the present disclosure to obtain a cured product or a printed matter, a method may be used in which the ultraviolet-curable composition or the ultraviolet-curable ink is applied onto a substrate, and the substrate is heated and then irradiated with an active energy ray. The heating temperature is preferably 40°C or higher, preferably 45°C or higher, and preferably 50°C or higher. Through this heating, volatile components such as water can be dried, and curability tends to be further enhanced. The upper limit of the heating temperature is not particularly limited.

The heating means is not particularly limited, and examples thereof include a ceramic heater, a halogen heater, and a quartz tube heater.

The timing at which heating is carried out may be any of before, during, and after adhesion of the ultraviolet-curable composition or the ultraviolet-curable ink of the present disclosure to the substrate, but it is more preferable to continue heating in all the processes before, during, and after the adhesion.

### Light Source (Active Energy Ray Source)

Mercury lamps, metal halide lamps, gas-solid lasers, and the like are widely known as light sources (active energy ray sources). However, a strong demand exists for mercury-free light sources from the current viewpoint of environmental protection, and replacement with GaN-based semiconductor ultraviolet light-emitting devices is very useful from both industrial and environmental perspectives. Furthermore, ultraviolet light-emitting diodes (UV-LED) and ultraviolet laser diodes (UV-LD) are small in size, have a long service life, are highly efficient, and are low in cost, and thus UV-LEDs and UV-LDs are expected to be used as light sources for ultraviolet-curable inkjet printers. Among these, UV-LEDs are preferable.

The emission peak wavelength of the active energy ray sources to be irradiated is preferably in a range from 350 to 450 nm. The irradiation energy is preferably 20 J/cm² or less, and for example, is preferably from 0.5 to 10 J/cm².

The number of the emission peak wavelengths may be one or more within the above wavelength range.

The irradiation with an active energy ray is not limited to an intentional process as described above, and may be, for example, sunlight irradiation due to outdoor exposure. When the reactivity (curability) of the radically polymerizable compound used in the present disclosure is high, heating alone is sufficient without the need for irradiation with an active energy ray. That is, as long as the ultraviolet-curable composition or ink of the present disclosure is curable through ultraviolet light, the ultraviolet-curable composition or ink is not limited to being used in a printing method having a process of irradiating with an active energy ray.

### Inkjet Ink Storage Container

The ultraviolet-curable ink of the present disclosure can be stored in an ink cartridge or an ink bottle, and thus, it is not necessary to directly touch the ink in work such as transporting the ink or replacing the ink. Therefore, staining of fingers or clothes can be prevented. In addition, foreign substances such as dust can be prevented from being mixed into the ink.

Details such as the shape, size, and material of the ink storage container itself are not particularly limited as long as such details are suitable, for example, for an inkjet printer to which the ink storage container is applied. However, it is desirable that the material of the ink storage container be a light-shielding material that does not transmit light, or that the container be covered with a light-shielding sheet or the like.

### Inkjet Recording Method

The ultraviolet-curable ink of the present disclosure can be suitably used in an inkjet recording method.

An inkjet recording method in which the ultraviolet-curable ink of the present disclosure is used preferably includes a step of ejecting the ultraviolet-curable ink of the present disclosure from an ejection nozzle of an inkjet printer to adhere the ultraviolet-curable ink to a substrate, a heating step of heating the substrate with the ink adhered, and an irradiation step of irradiating the ink adhered to the substrate with an active energy ray.

The step of adhering the ultraviolet-curable ink of the present disclosure to a substrate is not necessarily limited to a method using an inkjet printer, as long as the ink is adhered to the substrate in an atomized form (a mist or spray form).

In the heating step, the presence of a heating means generally tends to cause the ink on the nozzle surface to dry, resulting in poor ejection, and thus the heating temperature is preferably 120°C or lower and preferably 100°C or lower.

### Applications

The ultraviolet-curable composition and the ultraviolet-curable ink of the present disclosure are water-based and therefore are excellent in terms of environmental and safety properties, and the cured product and the printed matter also exhibit excellent water resistance and solvent resistance while satisfying the required performance aspects in a well-balanced manner. When the ultraviolet-curable composition and the ultraviolet-curable ink of the present disclosure are used as an ink, printed images excelling in high image quality performance and high cured film performance can be printed on various substrates with high productivity, and because of such merits, the ink can be used in various applications such as on posters, road signs, signboards, billboards, various outdoor and indoor display boards, building materials (surface materials such as exteriors, interiors, walls, floors, ceilings, and windows), exteriors of vehicles (automobiles, trains, aircraft, and the like), surface materials of furniture and OA equipment, and the like, and paper printed matter.

### Examples

Hereinafter, an embodiment of the present disclosure will be described. However, the present disclosure is not limited to this embodiment.

### Preparation of Radically Polymerizable Compound

A radically polymerizable compound 1 was produced by reacting 0.4 mol of a trimer of hexamethylene diisocyanate, 0.8 mol of dipentaerythritol pentaacrylate, and 0.4 mol of polyethylene glycol monoallyl ether (in Formula (3), Alk being an ethylene group, J being an allyl group, and g being from 30 to 40).

### Preparation of Ink 1

The radically polymerizable compound 1 was maintained at 60°C, GENOPOL TX-2 available from RAHN AG was added thereto as a polymerization initiator A at the compositional ratio described in Table 1 below, and ion-exchanged water preheated to 60°C was added thereto while stirring and mixing, and an aqueous dispersion of the radically polymerizable compound 1 was obtained. The volume-average particle size (D₅₀) of the particles of the radically polymerizable compound 1 in the aqueous dispersion of the radically polymerizable compound 1 was 36 nm as measured by a particle size-measuring device based on the dynamic light scattering method.

Next, ion-exchanged water, the aqueous dispersion, diethylene glycol ethyl methyl ether and propylene glycol (described as "EM" and "PG", respectively, in Table 1) as water-soluble organic solvents, a compound represented by Formula (1) as a polymerization initiator B (with A₁ being a 2,4,6-trimethylphenyl group, A₂ being a phenyl group, X^{m+} being a N-butyldiethanol ammonium ion, and m = 1), a compound represented by Formula (2) as a polymerization initiator C (with R₁ to R₃ and R₅ to R₈ each being a hydrogen atom, R₄ being Q⁻, Q⁻ being a carboxylate group, Yⁿ⁺ being a N-butyldiethanol ammonium ion, and n = 1), BYK-347 available from BYK Chemie Japan KK as a surfactant, and EMACOL SF CYAN AE2034F available from Sanyo Color Works, Ltd. (described as "Cy" in Table 1) as a pigment dispersion were added and mixed at the compositional ratio described in Table 1, and an ink 1 was obtained.

### Preparation of Ink 2

An ink 2 was obtained in the same manner as in the case of the ink 1 with the exception that the polymerization initiator A was not added.

### Preparation of Ink 3

An ink 3 was obtained in the same manner as in the case of the ink 1 with the exception that the polymerization initiator B was not used, and a compound represented by Formula (1) (with A₁ being a 2,4,6-trimethylphenyl group, A₂ being a phenyl group, X^{m+} being a lithium ion, and m = 1) was used as a polymerization initiator D.

### Preparation of Ink 4

An ink 4 was obtained in the same manner as in the case of the ink 1 with the exception that the polymerization initiator C was not used.

### Preparation of Inks 5 to 7

Inks 5 to 7 were obtained in the same manner as in the case of the ink 1 with the exception that the following pigment dispersions were used, and the type and blending ratio of the pigment dispersion and the blending ratio of the polymerization initiator C were changed as described in Table 1 below.
Pigment dispersion: EMACOL SF MAGENTA AG2172F (described as "Ma" in Table 1) available from Sanyo Color Works, Ltd.
Pigment dispersion: EMACOL SF YELLOW AG2242F (described as "Ye" in Table 1) available from Sanyo Color Works, Ltd.
Pigment dispersion: EMACOL SF BLACK AE2078F (described as "Bk" in Table 1) available from Sanyo Color Works, Ltd.

### Preparation of Inks 8 to 10

Inks 8 to 10 were obtained in the same manner as in the case of the inks 5 to 7 with the exception that the polymerization initiator A was not used.

### Preparation of Ink 11

An ink 11 was obtained in the same manner as in the case of the ink 5 with the exception that the polymerization initiator C was not used.

### Preparation of Ink 12

An ink 12 was obtained in the same manner as in the case of the ink 1 with the exception that an α-hydroxyacetophenone-based polymerization initiator (Irgacure 2959, available from Ciba Specialty Chemicals) was used as a polymerization initiator E instead of the polymerization initiator B.

### Preparation of Ink 13

An ink 13 was obtained in the same manner as in the case of the ink 1 with the exception that an oxime ester-based polymerization initiator (Irgacure OXE01, available from BASF SE) was added as a polymerization initiator F at the compositional ratio described in Table 1 below and at the same timing as the polymerization initiator A but in place of the polymerization Initiator A, and the polymerization initiator B was not added.

### Preparation of Ink 14

An ink 14 was obtained in the same manner as in the case of the ink 13 with the exception that the polymerization initiator A was added at the same timing as the polymerization initiator F at the compositional ratio described in Table 1 below.

### Preparation of Ink 15

An ink 15 was obtained in the same manner as in the case of the ink 1 with the exception that a water-soluble monomer (A-GLY-20E, available from Shin-Nakamura Chemical Co., Ltd.) was added at the compositional ratio described in Table 1 below instead of the aqueous dispersion of the radically polymerizable compound 1.

### Preparation of Ink 16

An ink 16 was obtained in the same manner as in the case of the ink 3 with the exception that a water-soluble monomer (A-GLY-20E, available from Shin-Nakamura Chemical Co., Ltd.) was added at the compositional ratio described in Table 1 below instead of the aqueous dispersion of the radically polymerizable compound 1.

**[Table 1]**

| Ink No. | Ink Compositional Ratio (mass%) | | | | | | | | | | | | | |
|---|---|---|---|---|---|---|---|---|---|---|---|---|---|---|
| | Pigment | | Radically polymerizable compound | | EM | PG | Polymerization Initiator A | Polymerization Initiator B | Polymerization Initiator C | Polymerization Initiator D | Polymerization Initiator E | Polymerization Initiator F | Surfactant | Water |
| Ink 1 | Cy | 2 | Compound 1 | 10 | 10 | 10 | 0.1 | 0.5 | 0.1 | | | | 0.6 | Residue |
| Ink 2 | Cy | 2 | Compound 1 | 10 | 10 | 10 | | 0.5 | 0.1 | | | | 0.6 | Residue |
| Ink 3 | Cy | 2 | Compound 1 | 10 | 10 | 10 | 0.1 | | 0.1 | 0.5 | | | 0.6 | Residue |
| Ink 4 | Cy | 2 | Compound 1 | 10 | 10 | 10 | 0.1 | 0.5 | | | | | 0.6 | Residue |
| Ink 5 | Ma | 2.5 | Compound 1 | 10 | 10 | 10 | 0.1 | 0.5 | 0.3 | | | | 0.6 | Residue |
| Ink 6 | Ye | 1.5 | Compound 1 | 10 | 10 | 10 | 0.1 | 0.5 | 0.3 | | | | 0.6 | Residue |
| Ink 7 | Bk | 1.5 | Compound 1 | 10 | 10 | 10 | 0.1 | 0.5 | 0.5 | | | | 0.6 | Residue |
| Ink 8 | Ma | 2.5 | Compound 1 | 10 | 10 | 10 | | 0.5 | 0.3 | | | | 0.6 | Residue |
| Ink 9 | Ye | 1.5 | Compound 1 | 10 | 10 | 10 | | 0.5 | 0.3 | | | | 0.6 | Residue |
| Ink 10 | Bk | 1.5 | Compound 1 | 10 | 10 | 10 | | 0.5 | 0.5 | | | | 0.6 | Residue |
| Ink 11 | Ma | 2.5 | Compound 1 | 10 | 10 | 10 | 0.1 | 0.5 | | | | | 0.6 | Residue |
| Ink 12 | Cy | 2 | Compound 1 | 10 | 10 | 10 | 0.1 | | 0.1 | | 0.5 | | 0.6 | Residue |
| Ink 13 | Cy | 2 | Compound 1 | 10 | 10 | 10 | | | 0.1 | | | 0.5 | 0.6 | Residue |
| Ink 14 | Cy | 2 | Compound 1 | 10 | 10 | 10 | 0.1 | | 0.1 | | | 0.5 | 0.6 | Residue |
| Ink 15 | Cy | 2 | A-GLY-20E | 10 | 10 | 10 | | 0.5 | 0.1 | | | | 0.6 | Residue |
| Ink 16 | Cy | 2 | A-GLY-20E | 10 | 10 | 10 | | | 0.1 | 0.5 | | | 0.6 | Residue |

Next, cured films were formed by the following method using the inks 1 to 16, and the water resistance and the solvent resistance were evaluated.

### Example 1

An illuminated PET film was used as a substrate, and the ink 1 was applied onto the substrate at a film thickness of 15 µm over an area of 50 cm² using a bar coater, the coated film was heated at 80°C for 10 minutes, and then irradiated with ultraviolet light having an irradiation energy of 7 J/cm² from an LED having a peak wavelength of 385 nm, and thereby a cured film was formed.

The illuminated PET was a non-absorptive illuminated transparent film made of polyethylene terephthalate and subjected to a surface treatment.

### Examples 2 to 11 and Comparative Examples 1 to 6

Cured films were obtained in the same manner as in Example 1 with the exception that the type of ink was changed as indicated in Tables 2 and 3.

### Cured Film Evaluation 1: Examples 1 and 2 and Comparative Examples 1 to 6

The cured films obtained above were used to evaluate water resistance, solvent resistance, or both.

### Water Resistance Evaluation 1

Water resistance was evaluated according to the following evaluation criteria by visually observing the presence or absence of damage to the cured film or adhesion of the cured film to absorbent cotton when the absorbent cotton was immersed in ion-exchanged water and the cured film surface was rubbed with the absorbent cotton at a 200 g load. The results are presented in Table 2.
○: The cured film was not damaged, and the cured film did not adhere to the absorbent cotton.
×: The cured film was damaged, or the cured film adhered to the absorbent cotton.

### Solvent Resistance Evaluation 1

Solvent resistance was evaluated according to the following evaluation criteria by immersing absorbent cotton in a mixed liquid obtained by mixing ethanol and water at a ratio of 7:3 (mass ratio), rubbing the surface of the cured film with the absorbent cotton at a 200 g load, and then visually observing the presence or absence of damage to the cured film or adhesion of the cured film. In the present disclosure, an evaluation of "○" was regarded as passing. The results are presented in Table 2.

The solvent resistance test was not carried out on a cured film for which the water resistance was evaluated to be ×.
○: The cured film was not damaged, and the cured film did not adhere to the absorbent cotton.
△: The cured film was damaged, or the cured film adhered to the absorbent cotton.
-: The solvent resistance test was not carried out.

**[Table 2]**

| | Ink No. | Ink Compositional Ratio (mass%) | | | | | | | | | | | | | | Evaluation | |
|---|---|---|---|---|---|---|---|---|---|---|---|---|---|---|---|---|---|
| | | Pigment | | Radically polymerizable compound | | EM | PG | Polymerization Initiator | | | | | | Surfactant | Water | Water resistance | Solvent resistance |
| | | | | | | | | A | B | C | D | E | F | | | | |
| Example 1 | Ink 1 | Cy | 2 | Compound 1 | 10 | 10 | 10 | 0.1 | 0.5 | 0.1 | | | | 0.6 | Residue | ○ | ○ |
| Example 2 | Ink 2 | Cy | 2 | Compound 1 | 10 | 10 | 10 | | 0.5 | 0.1 | | | | 0.6 | Residue | ○ | ○ |
| Comparative Example 6 | Ink 3 | Cy | 2 | Compound 1 | 10 | 10 | 10 | 0.1 | | 0.1 | 0.5 | | | 0.6 | Residue | ○ | Δ |
| Comparative Example 1 | Ink 12 | Cy | 2 | Compound 1 | 10 | 10 | 10 | 0.1 | | 0.1 | | 0.5 | | 0.6 | Residue | × | - |
| Comparative Example 2 | Ink 13 | Cy | 2 | Compound 1 | 10 | 10 | 10 | | | 0.1 | | | 0.5 | 0.6 | Residue | × | - |
| Comparative Example 3 | Ink 14 | Cy | 2 | Compound 1 | 10 | 10 | 10 | 0.1 | | 0.1 | | | 0.5 | 0.6 | Residue | × | - |
| Comparative Example 4 | Ink 15 | Cy | 2 | A-GLY-20E | 10 | 10 | 10 | | 0.5 | 0.1 | | | | 0.6 | Residue | × | - |
| Comparative Example 5 | Ink 16 | Cy | 2 | A-GLY-20E | 10 | 10 | 10 | | | 0.1 | 0.5 | | | 0.6 | Residue | × | - |

From Table 2, it was found that the ultraviolet-curable ink of the present disclosure provides a cured film having good water resistance and good solvent resistance.

In contrast, it was found that the cured film performance was inferior in Comparative Examples 1 to 3 that did not contain a compound represented by Formula (1) as a polymerization initiator, in Comparative Examples 4 and 5 in which the radically polymerizable compound was dissolved and not present as particles, and in Comparative Example 6, which contained, as a polymerization initiator, a compound in which X^{m+} in Formula (1) was a lithium ion.

As described above, the ultraviolet-curable ink of the present disclosure can be prepared by adding a colorant to the ultraviolet-curable composition of the present disclosure. It is considered that even an ultraviolet-curable composition to which a colorant is not added can provide the same effect as that of the ultraviolet-curable inks presented in the examples.

### Cured Film Evaluation 2: Examples 3 to 11

The cured films obtained above were used to evaluate water resistance and solvent resistance.

### Water Resistance Evaluation 2

Water resistance was evaluated according to the following evaluation criteria by visually observing the presence or absence of damage to the cured film or adhesion of the cured film to absorbent cotton when the absorbent cotton was immersed in ion-exchanged water and the cured film surface was rubbed with the absorbent cotton at a 200 g load. The results are shown in Table 3.
○: The cured film was not damaged, and the cured film did not adhere to the absorbent cotton.
×: The cured film was damaged, or the cured film adhered to the absorbent cotton.

### Solvent Resistance Evaluation 2

Solvent resistance was evaluated according to the following evaluation criteria by immersing absorbent cotton in a mixed liquid obtained by mixing ethanol and water at a ratio of 6:4 (mass ratio), rubbing the surface of the cured film with the absorbent cotton at a 200 g load, and then visually observing the presence or absence of damage to the cured film or adhesion of the cured film. In the present disclosure, evaluations of "1" and "2" were regarded as passing. The results are shown in Table 3.

Note that the solvent resistance test was not carried out on a cured film for which the water resistance was evaluated to be ×.
1: The cured film was not damaged, and the cured film did not adhere to the absorbent cotton.
2: The cured film was damaged, or the cured film adhered to the absorbent cotton.

**[Table 3]**

| | Ink No. | Ink Compositional Ratio (mass%) | | | | | | | | | | | | | | Evaluation | |
|---|---|---|---|---|---|---|---|---|---|---|---|---|---|---|---|---|---|
| | | Pigment | | Radically polymerizable compound | | EM | PG | Polymerization Initiator | | | | | | Surfactant | Water | Water resistance | Solvent resistance |
| | | | | | | | | A | B | C | D | E | F | | | | |
| Example 3 | Ink 1 | Cy | 2 | Compound 1 | 10 | 10 | 10 | 0.1 | 0.5 | 0.1 | | | | 0.6 | Residue | ○ | 1 |
| Example 4 | Ink 4 | Cy | 2 | Compound 1 | 10 | 10 | 10 | 0.1 | 0.5 | | | | | 0.6 | Residue | ○ | 2 |
| Example 5 | Ink 5 | Ma | 2.5 | Compound 1 | 10 | 10 | 10 | 0.1 | 0.5 | 0.3 | | | | 0.6 | Residue | ○ | 1 |
| Example 6 | Ink 6 | Ye | 1.5 | Compound 1 | 10 | 10 | 10 | 0.1 | 0.5 | 0.3 | | | | 0.6 | Residue | ○ | 1 |
| Example 7 | Ink 7 | Bk | 1.5 | Compound 1 | 10 | 10 | 10 | 0.1 | 0.5 | 0.5 | | | | 0.6 | Residue | ○ | 1 |
| Example 8 | Ink 8 | Ma | 2.5 | Compound 1 | 10 | 10 | 10 | | 0.5 | 0.3 | | | | 0.6 | Residue | ○ | 1 |
| Example 9 | Ink 9 | Ye | 1.5 | Compound 1 | 10 | 10 | 10 | | 0.5 | 0.3 | | | | 0.6 | Residue | ○ | 1 |
| Example 10 | Ink 10 | Bk | 1.5 | Compound 1 | 10 | 10 | 10 | | 0.5 | 0.5 | | | | 0.6 | Residue | ○ | 1 |
| Example 11 | Ink 11 | Ma | 2.5 | Compound 1 | 10 | 10 | 10 | 0.1 | 0.5 | | | | | 0.6 | Residue | ○ | 2 |

From Table 3, it was found that the ultraviolet-curable ink of the present disclosure can be used to obtain a cured film having good water resistance and good solvent resistance.

It was also found that, even in a case in which the polymerization initiator C represented by Formula (2) was not contained as in Examples 4 and 11, a cured film having excellent water resistance and solvent resistance can be formed, but a cured film having even more excellent water resistance and solvent resistance can be formed by containing the polymerization initiator C, as in Examples 3 and 5 to 10. Furthermore, from Examples 3 and 5 to 7, it is clear that the effects of the present disclosure do not depend on the type of pigment that is used.

Moreover, as described above, the ultraviolet-curable ink of the present disclosure can be prepared by adding a colorant to the ultraviolet-curable composition of the present disclosure. It is considered that even an ultraviolet-curable composition to which a colorant is not added can provide the same effect as that of the ultraviolet-curable inks presented in the examples.

Although the present disclosure has been described in detail with reference to specific embodiments, it will be apparent to those skilled in the art that various modifications can be made without departing from the spirit and scope of the present disclosure.

The present application is based on JP 2023-074493 filed on April 28, 2023, the entirety of which is incorporated herein by reference.

## Claims

1. An ultraviolet-curable composition comprising at least a radically polymerizable compound, a polymerization initiator, and a solvent,
the radically polymerizable compound being present as particles, and
the polymerization initiator containing a compound represented by Formula (1): 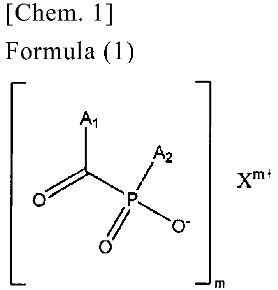
in Formula (1),
A₁ represents an aryl group that may have a substituent,
A₂ represents any one of an alkyl group that may have a substituent, an alkoxy group that may have a substituent, an aryl group that may have a substituent, and an aryloxy group that may have a substituent,
X^{m+} represents any one selected from the group consisting of an alkaline earth metal ion, an ion derived from an organic amine, and an ammonium ion, and
m represents an integer of 1 or greater.

2. The ultraviolet-curable composition according to claim 1, wherein the solvent contains water.

3. The ultraviolet-curable composition according to claim 1 or 2, wherein the solvent further contains a water-soluble organic solvent.

4. The ultraviolet-curable composition according to claim 1 or 2, further comprising an additional polymerization initiator, and the additional polymerization initiator including a compound represented by Formula (2): 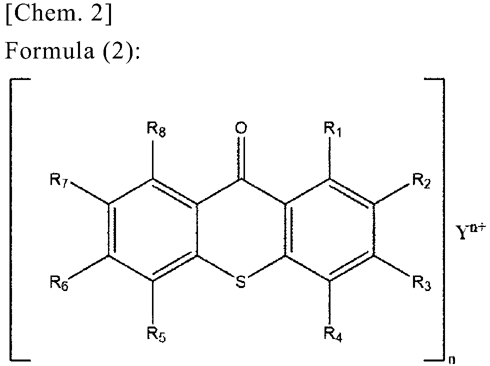 in Formula (2),
each of R₁ to R₈ independently represents a hydrogen atom or a substituent, provided that at least one of R₁ to R₈ is Q⁻,
Q⁻ represents a deprotonated anionic functional group,
Yⁿ⁺ represents a counter cation, and
n represents an integer of 1 or greater.

5. The ultraviolet-curable composition according to claim 4, wherein R₄ in Formula (2) is Q⁻.

6. The ultraviolet-curable composition according to claim 4, wherein, in Formula (2),
Q⁻ comprises a group containing a carboxylate group or a sulfonyl group at a terminal end, and
Yⁿ⁺ comprises at least one selected from the group consisting of an alkali metal ion, an alkaline earth metal ion, an ion derived from an organic amine, and an ammonium ion.

7. The ultraviolet-curable composition according to claim 1 or 2, wherein X^{m+} comprises an ion derived from an organic amine or an ammonium ion.

8. The ultraviolet-curable composition according to claim 1 or 2, further comprising a surfactant,
wherein the surfactant comprises a silicone-based surfactant.

9. A method for producing a cured product, the method comprising:
applying or printing the ultraviolet-curable composition according to claim 1 or 2 onto a surface of a substrate, and
irradiating the substrate with an active energy ray.

10. A cured product obtained by curing the ultraviolet-curable composition according to claim 1 or 2.

11. An ultraviolet-curable ink comprising at least a radically polymerizable compound, a polymerization initiator, and a solvent,
the radically polymerizable compound being present as particles, and
the polymerization initiator containing a compound represented by Formula (1): 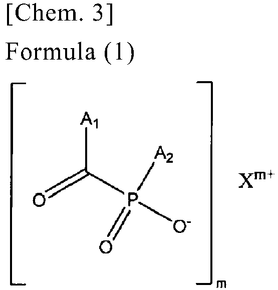
in Formula (1),
A₁ represents an aryl group that may have a substituent,
A₂ represents any one of an alkyl group that may have a substituent, an alkoxy group that may have a substituent, an aryl group that may have a substituent, and an aryloxy group that may have a substituent,
X^{m+} represents any one selected from the group consisting of an alkaline earth metal ion, an ion derived from an organic amine, and an ammonium ion, and
m represents an integer of 1 or greater.

12. The ultraviolet-curable ink according to claim 11, wherein the solvent contains water.

13. The ultraviolet-curable ink according to claim 11 or 12, wherein the solvent further contains a water-soluble organic solvent.

14. The ultraviolet-curable ink according to claim 11 or 12, further comprising an additional polymerization initiator, and the additional polymerization initiator including a compound represented by Formula (2): 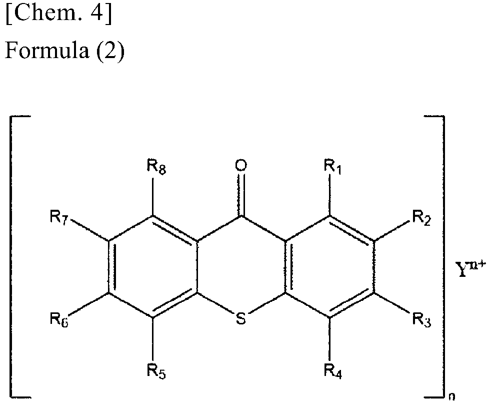 in Formula (2),
each of R₁ to R₈ independently represents a hydrogen atom or a substituent, provided that at least one of R₁ to R₈ is Q⁻,
Q⁻ represents a deprotonated anionic functional group,
Yⁿ⁺ represents a counter cation, and
n represents an integer of 1 or greater.

15. The ultraviolet-curable ink according to claim 14, wherein R₄ in Formula (2) is Q⁻.

16. The ultraviolet-curable ink according to claim 14, wherein, in Formula (2),
Q⁻ comprises a group containing a carboxylate group or a sulfonyl group at a terminal end, and
the counter cation comprises at least one selected from the group consisting of an alkali metal ion, an alkaline earth metal ion, an ion derived from an organic amine, and an ammonium ion.

17. The ultraviolet-curable ink according to claim 11 or 12, wherein the X^{m+} comprises an ion derived from an organic amine or an ammonium ion.

18. The ultraviolet-curable ink according to claim 11 or 12, further comprising a surfactant,
wherein the surfactant comprises a silicone-based surfactant.

19. A method for producing a printed matter, the method comprising applying or printing the ultraviolet-curable ink according to claim 11 or 12, onto a surface of a substrate, and then irradiating the substrate with an active energy ray.

20. A printed matter obtained by curing the ultraviolet-curable ink according to claim 11 or 12,.
